# EUROPEAN PATENT SPECIFICATION

(11) **EP 3 778 537 B1**
(45) Date of publication and mention of the grant of the patent: **07.06.2023**
(21) Application number: 18912963.8
(22) Date of filing: 10.09.2018
(51) Int. Cl.: C05B 17/00, C05F 11/00

(54) **MEDICAL FERTILIZER COMPOSITION CONTAINING POTASSIUM PHOSPHITE AND POLYGLUTAMIC ACID**
MEDIZINISCHE DÜNGEMITTELZUSAMMENSETZUNG MIT KALIUMPHOSPHIT UND POLYGLUTAMINSÄURE
COMPOSITION D'ENGRAIS MÉDICAL CONTENANT DU PHOSPHITE DE POTASSIUM ET DE L'ACIDE POLYGLUTAMIQUE

(30) Priority: 25.03.2018 CN 201810248757
(43) Date of publication of application: 17.02.2021
(73) Proprietor: Jiangsu Huifeng Bio Agriculture Co., Ltd., Yancheng, Jiangsu 224100 (CN)
(72) Inventor: ZHONG, Hangen, Yancheng, Jiangsu 224100 (CN); JI, Hongjin, Yancheng, Jiangsu 224100 (CN); TAI, Shaojie, Yancheng, Jiangsu 224100 (CN); LUO, Lijuan, Yancheng, Jiangsu 224100 (CN)
(74) Representative: Engelhard, Markus
(86) International application number: PCT/CN2018/104850
(87) International publication number: WO 2019/184259

(56) References cited:
- AU-A1- 2013 228 100
- CN-A- 1 827 560
- CN-A- 103 819 274
- CN-A- 105 638 749
- CN-A- 107 298 607
- CN-A- 107 365 723
- CN-A- 107 641 045
- US-A1- 2017 166 488
- US-A1- 2018 049 444

## Description

### BACKGROUND

### Technical Field

The present invention relates to the technical field of agricultural chemistry, and specifically to a fungicidal fertilizer composition comprising potassium phosphite and γ-poly-glutamic acid.

### Related Art

γ-poly-glutamic acid (γ-PGA), also known as natto gum, is a water-soluble, biodegradable, non-toxic, and biopolymer prepared by microbial fermentation. γ-PGA is a homopolyamino acid made of glutamic acid monomers linked by amide bonds. It has the advantages of excellent biodegradability, super adsorption, and non-toxicity. Adding γ-PGA to compound fertilizer can reduce the loss of nutrients in fertilizers, improves fertilizer utilization and regulates plant growth. It has significant application effects on rice, wheat, corn, vegetables, fruit trees, flowers and other plants, and can significantly increase crop yields.

Phosphorous acid, molecular formula H₃PO₃, is a common acid with one oxygen atom less than phosphoric acid, but it is significantly different from phosphoric acid in physical and chemical properties and uses. In the 1970s, the researchers from RhonePoulenc discovered the activity of phosphite compounds against some fungi during fungicide screening. In 1977, Fosetyl-aluminium was developed and commercialized. Then, sodium phosphite and calcium phosphite were confirmed to have fungicidal activity, but they have not been commercialized.

Since the 1980s, potassium phosphite was initially developed in Australia and registered as a fungicide. In the 1990s, the application of potassium phosphite in the United States has been very popular, either as a fungicide or as a fertilizer. The registration certificates of fungicides containing potassium phosphite has been registered in the United States. The registered crops include vegetables, fruit trees, lawns, flowers, and potatoes, etc. The main diseases for prevention and treatment include late blight, downy mildew, pythium disease, powdery mildew, rot, fusarium wilt, anthracnose, early blight, and bacterial diseases, and even Citrus yellow shoot. The methods of application include spraying, root soaking, irrigation, and injection. In many cases, potassium phosphite is used as fertilizer to supplement phosphorus and potassium for crops.

Due to the long-term and unreasonable application of chemical pesticides and chemical fertilizers, soil pollution is exacerbated and the concentration of individual nutrients in the soil is too high, which not only causes the excessive phase reactions in the soil, but also produces harmful substances in the soil, and is a main cause of soil hardening in some areas, causing a decline in crop yields and reduced quality of agricultural products. Moreover, since most pesticides and fertilizers cannot be applied at the same time or affect their respective effects when they are applied together, pesticides and fertilizers need to be applied separately, which increases the labor costs. Therefore, the development of new types of fungicidal fertilizer products, especially the development of compatible and environmentally friendly fungicidal fertilizer products, is an important means for achieving sustainable development of agriculture.

AU 2013 228 100 A1 discloses a fungicidal composition including ingredients with fertilizing activity. It contains a polyelectrolyte complex of a polyanion such as poly-y-glutamic acid, and a phosphite as herbicide.

US 2017/166488 A1 discloses a fertilizer including fungicides, such as potassium phosphite.

### SUMMARY

The technical problem to be solved by the present invention is to provide a safe and environmentally friendly fungicidal fertilizer product in view of the deficiencies in the prior art.

The objects of the present invention can be accomplished through the following technical solutions:
A fungicidal fertilizer composition is provided, in which the active ingredients include γ-poly-glutamic acid and potassium phosphite.

Phosphorous acid has a certain effect on plant diseases, but because of its strong acidity, it is not suitable for spraying on certain crops. Phosphorous acid is generally neutralized with alkali. Common alkali includes, for example, potassium hydroxide. Phosphorous acid reacts with potassium hydroxide to produce a monobasic potassium salt of phosphorous acid (i.e. potassium dihydrogen phosphite) and a dibasic potassium salt (i.e. dipotassium hydrogen phosphite). Therefore, in the present invention, potassium phosphite refers to the general term of the monobasic potassium salt and the dibasic potassium salt of phosphorous acid, and may also be a mixture of the monobasic potassium salt and the dibasic potassium salt of phosphorous acid.

The present inventors find through research that γ-poly-glutamic acid and potassium phosphite have synergistic and complementary effects in promoting crop growth and controlling crop diseases, and can be used as an excellent fungicidal fertilizer composition.

A suitable weight ratio between γ-poly-glutamic acid and potassium phosphite is 1:8-400, and preferably 1: 10~350. Further, the weight ratio of the two components can be preferably 1: 10-300, and more preferably 1:15-150.

In practical applications, depending on the types of crops, different time of crop growth, soil moisture or disease condition of crops and other factors, the composition of the present invention can be applied with other pesticides or fertilizers. Alternatively, other pesticides or fertilizers (such as microbial agents) and the composition of the present invention can be optionally processed into a suitable formulation. Preferred are bio-fertilizers or bio-pesticides. Suitable bio-fertilizers or bio-pesticides include preferably Bacillus microbial agents, and mixed microbial agents of one or more of *Trichoderma harzianum* or *Purpureocillium lilacinum.* The Bacillus microbial agent is preferably a mixed microbial agent of one or more of *Bacillus subtilis, Bacillus licheniformis, Bacillus thuringiensis, Bacillus cereus, Bacillus sedimentatum* or *Bacillus lateraporus.* The effective viable count of the microbial agent in the composition is not less than 2 × 10⁸/g.

In order to further improve the effect of the present invention, organic matter can be added to the composition of the present invention. The organic matter content is not less than 8%. Suitable organic matter includes, but is not limited to, a mixture of one or more of cellulose, hemicellulose, protein, humic acid, lipids, asphaltenes, resins and gums, tannins, steroids, vitamins, terpenes, and humic substances. Alternatively, fertilizers containing organic matter (such as livestock and poultry manure, municipal waste organic matter, sludge, straw, wood dust, food processing waste, etc.) and substance containing organic matter (peat, weathered coal, lignite, humic acid, etc.), can also be added to the microbial agents or growth-stimulating substances, such as urea.

When the composition of the present invention is applied, according to the route of application to the crops, other macronutrient or micronutrient fertilizers or a mixture of other macronutrient or micronutrient fertilizers may also be optionally added. According to different growth requirements of crops and soil moisture conditions, different types or amounts of macronutrients or micronutrients are added or applied in admixture. These macronutrients or micronutrients are added according to crop characteristics, soil moisture, and environmental characteristics. The application technologies of these elements are known art in the industry.

In the present invention, the micronutrients refer to nutrients essential for plant growth, including one or more of sulfur, magnesium, calcium, iron, manganese, zinc, copper, boron, molybdenum, chlorine, nickel, silicon, sodium, and cobalt. The macronutrients include one or more of nitrogen, phosphorus and potassium.

The fungicidal fertilizer composition of the present invention may be in the form of solid or liquid. According to different application objects, it can be processed into granules, flakes, particulates or powders, preferably granules and powders. The liquid formulations can be processed into water-soluble or suspended forms.

In one technical solution of the present invention, a process for processing a granular formulation comprises the following steps: 1) crushing potassium phosphite, granulating, drying and cooling; 2) spraying a γ-poly-glutamic acid solution evenly on the surface of potassium phosphite granules (γ-poly-glutamic acid:potassium phosphite in weight ratio 1:8-400); 3) optionally adding a fillers or other additives can be added according to actual application needs; 4) drying the fungicidal fertilizer granules; and 5) quantitatively packaging to obtain the fungicidal fertilizer granular formulation of the present invention.

The granular formulation can also be prepared through a process mainly comprising the following steps: 1) drying the γ-poly-glutamic acid solution to form a powder; 2) pulverizing potassium phosphite into a powder; 3) mixing γ-poly-glutamic acid and potassium phosphite uniformly according to a weight ratio of 1:8-400, and optionally adding a fillers or other additives according to actual application needs to obtain a powdery mixture; 4) granulating, drying and cooling, to prepare a fungicidal fertilizer granular formulation; and 5) quantitatively packaging to obtain the fungicidal fertilizer granular formulation of the present invention.

On the basis of Step 3, directly drying and cooling gives the powder formulation of the present invention.

In one technical solution of the present invention, a process for processing a granular formulation comprises the following steps: mixing γ-poly-glutamic acid and potassium phosphite at a weight ratio of 1:8-400 uniformly, dissolving the mixture in water, and adding an appropriate amount of additives to obtain a fungicidal fertilizer of a certain content in the form of aqueous solution.

In the above solid or liquid processing steps, other pesticides or fertilizers can be added according to the application needs. Chemical or biological microbial agents, preferably microbial agents, may be used. The effective viable count of the microbial agent is greater than 2 × 10⁹/g to obtain a fungicidal fertilizer composition comprising a microbial agent. Suitable microbial agents are preferably bio-fertilizers or bio-pesticides. Suitable bio-fertilizers or bio-pesticides include preferably Bacillus microbial agents, and mixed microbial agents of one or more of *Trichoderma harzianum* or *Purpureocillium lilacinum.* The Bacillus microbial agent is preferably a mixed microbial agent of one or more of *Bacillus subtilis, Bacillus licheniformis, Bacillus thuringiensis, Bacillus cereus, Bacillus sedimentatum* or *Bacillus lateraporus.*

In the above technical solutions, organic matter can also be added after Step 4, where content in percentage by weight of organic matter is higher than 8%. The organic matter is preferably protein, cellulose, humic acid, and hemicellulose.

Use of the fungicidal fertilizer composition in controlling crop diseases, promoting crop growth and increasing crop yield is provided.

The synergistic and complementary effects of γ-poly-glutamic acid and potassium phosphite have specifically the following manifestations: 1. It has obvious disease resistance effects on crops. Potassium phosphite is decomposed into phosphorous acid and potassium when sprayed on the surface of crops. Phosphorous acid can be used as a fungicide to directly act on the surface of plants, thus preventing and curing plant diseases. γ-poly-glutamic acid can enhance the utilization and duration of use of phosphorous acid as a fungicide, and γ-poly-glutamic acid can activate the inherent disease resistance and stress resistance of crops, and has a synergistic effect with potassium phosphite on crop disease prevention and control. 2. It can improve the fertilizer absorption and utilization by crops. When potassium phosphite is applied as a potassium fertilizer to the soil, the potassium element in potassium phosphite will be gradually released. Only a small part is absorbed and used by plants, and a large part will be lost with water in the soil, γ-poly-glutamic acid, as a very good fertilizer synergist, has a strong function of retaining water and fertilizer in the soil, and can reduce the loss of water in the soil, thereby reducing the loss of potassium in potassium phosphite in the soil, and improving the absorption and utilization of fertilizer by crops. 3. The combination of γ-poly-glutamic acid and potassium phosphite, that is, the combination of fungicide and fertilizer, can reduce the repeated spraying of fertilizers and fungicides by a user, thus reducing the investment in agriculture and saving labor cost.

### DETAILED DESCRIPTION

To make the objects, the technical solution, and advantages of the present invention clearer, the present invention is described in further detail with reference to examples. It should be understood that the specific examples described herein are merely provided for illustrating, instead of limiting the present invention.

The percentages given in all the formulations in the examples below are all weight percentages. The processing processes of compound fertilizers in the present invention are known in the prior art, which may be varied as desired.

### I. Examples

1. Fertilizer prepared according to the solid formulation processing method in the description (Table 1)

| Example | Ingredients and Contents | | Ratio | Formulation |
|---|---|---|---|---|
| | γ-poly-glutamic acid | Potassium phosphite | | |
| Example 1 | 12.5g | 5000g | 1:400 | Granular formulation |
| Example 2 | 13.3g | 4000g | 1:300 | Granular formulation |
| Example 3 | 15g | 3000g | 1:200 | Granular formulation |
| Example 4 | 16.7g | 2000g | 1:120 | Granular formulation |
| Example 5 | 18.8g | 1500g | 1:80 | Powder |
| Example 6 | 20g | 1200g | 1:60 | Powder |
| Example 7 | 20g | 800g | 1:40 | Granular formulation |
| Example 8 | 18g | 360g | 1:20 | Granular formulation |
| Example 9 | 20g | 200g | 1:10 | Powder |
| Example 10 | 18g | 144g | 1:8 | Granular formulation |
| Example 11 | 18g | 90g | 1:5 | Granular formulation |

2. Fertilizer prepared according to the liquid formulation processing method in the description (Table 2)

| Example | Ingredients and Contents | | Ratio | Formulation |
|---|---|---|---|---|
| | γ-poly-glutamic acid | Potassium phosphite | | |
| Example 12 | 11.4g | 4000g | 1:350 | Liquid formulation |
| Example 13 | 13.3g | 2000g | 1:150 | Liquid formulation |
| Example 14 | 20g | 2000g | 1:100 | Liquid formulation |
| Example 15 | 20g | 1400g | 1:70 | Liquid formulation |
| Example 16 | 20g | 1000g | 1:50 | Liquid formulation |
| Example 17 | 18g | 540g | 1:30 | Liquid formulation |
| Example 18 | 20g | 300g | 1:15 | Liquid formulation |
| Example 19 | 18g | 144g | 1:8 | Liquid formulation |

3. Compound microbial fungicidal fertilizer prepared by the composition of fungicidal fertilizer of the present invention and microbial agent (Table 3)

| Example | Ingredients and Contents | | Ratio | Species and counts of microbial agent | | Organic matter and content (%) | Formulation |
|---|---|---|---|---|---|---|---|
| | γ-poly-glutamic acid | Potassium phosphite | | Species | Counts (×10⁸/g) | | |
| Example 20 | 20g | 2000g | 1:100 | *Bacillus subtilis* | 60.0 | Cellulose, 30% | Powder |
| Example 21 | 20g | 2000g | 1:100 | *Trichoderma harzianum* | 60.0 | Protein, 30% | Powder |
| Example 22 | 20g | 2000g | 1:100 | *Bacillus licheniformis* | 60.0 | Peat, 30% | Powder |
| Example 23 | 20g | 2000g | 1:100 | *Bacillus thuringiensis* | 60.0 | Humic acid, 30% | Powder |
| Example 24 | 20g | 2000g | 1:100 | *Bacillus cereus* | 60.0 | Cellulose, 30% | Powder |
| Example 25 | 20g | 2000g | 1:100 | *Bacillus sedimentatum* | 60.0 | Cellulose, 30% | Powder |
| Example 26 | 20g | 2000g | 1:100 | *Bacillus lateraporus* | 60.0 | Protein, 30% | Powder |
| Example 27 | 20g | 800g | 1:40 | *Bacillus subtilis* | 20.0 | Peat, 20% | Granular formulation |
| Example 28 | 20g | 800g | 1:40 | *Trichoderma harzianum* | 20.0 | Humic acid, 20% | Granular formulation |
| Example 29 | 20g | 800g | 1:40 | *Bacillus licheniformis* | 20.0 | Cellulose, 20% | Granular formulation |
| Example 30 | 20g | 800g | 1:40 | *Bacillus thuringiensis* | 20.0 | Protein, 20% | Granular formulation |
| Example 31 | 20g | 800g | 1:40 | *Bacillus cereus* | 20.0 | Cellulose, 20% | Granular formulation |
| Example 32 | 20g | 800g | 1:40 | *Bacillus sedimentatum* | 20.0 | Peat, 20% | Granular formulation |
| Example 33 | 20g | 800g | 1:40 | *Bacillus lateraporus* | 20.0 | Humic acid, 20% | Granular formulation |
| Example 34 | 20g | 800g | 1:40 | *Bacillus licheniformis* | 20.0 | Cellulose, 8% | Liquid |
| Example 35 | 20g | 300g | 1:15 | *Bacillus thuringiensis* | 2.0 | Protein, 8% | Liquid |
| Example 36 | 20g | 300g | 1:15 | *Bacillus cereus* | 2.0 | Peat, 8% | Liquid |
| Example 37 | 20g | 300g | 1:15 | *Bacillus sedimentatum* | 2.0 | Humic acid, 8% | Liquid |
| Example 38 | 20g | 300g | 1:15 | *Bacillus lateraporus* | 2.0 | Cellulose, 8% | Liquid |
| Example 39 | 20g | 300g | 1:15 | *Trichoderma harzianum* | 2.0 | Protein, 8% | Liquid |
| Example 40 | 20g | 300g | 1:15 | *Bacillus subtilis* | 2.0 | Peat, 8% | Liquid |

4. Fungicidal fertilizer composition prepared by the fungicidal fertilizer of the present invention, micronutrients, and macronutrients (Table 4)

| Example | Ingredients and Contents | | Ratio | Other ingredients and contents | Formulation |
|---|---|---|---|---|---|
| | γ-poly-glutamic acid | Potassium phosphite | | | |
| Example 41 | 20g | 1800g | 1:90 | N+P+K≥500g/1, Cu+Zn+Fe+Mn+B≥100g/l | Liquid |
| Example 42 | 20g | 1000g | 1:50 | N+P+K≥500g/1, Cu+Zn+Fe+Mn+B≥100g/l | Liquid |
| Example 43 | 20g | 600g | 1:30 | N+P+K>500g/1, Cu+Zn+Fe+Mn+B≥100g/1 | Liquid |
| Example 44 | 20g | 200g | 1:10 | N+P+K≥500g/1, Cu+Zn+Fe+Mn+B≥100g/1 | Liquid |
| Example 45 | 20g | 600g | 1:30 | N+P+K≥500g/1 | Liquid |
| Example 46 | 20g | 200g | 1:10 | N+P+K≥500g/1 | Liquid |
| Example 47 | 20g | 800g | 1:40 | Cu+Zn+Fe+Mn+B≥100g/1 | Liquid |
| Example 48 | 20g | 200g | 1:10 | Cu+Zn+Fe+Mn+B≥100g/1 | Liquid |

### II. Field efficiency verification test

(1) Yield increase and disease control test of potatoes with fungicidal fertilizer composition of the present invention. This test was conducted in 2017 in Anding District, Dingxi City, Gansu Province. This area is a typical semi-arid rain-fed agricultural area. The soil type is loessial soil, with deep soil layers and uniform soil fertility. The previous crop is rape. The fertilizer of the present invention was totally applied as a base fertilizer at a time. The plot had an area of 20 m² (4m × 5m), was arranged randomly, and repeated 3 times. Ridging after flat planting in wide and narrow rows was adopted. The wide row spacing was 60 cm, the narrow row spacing was 30 cm, the plant spacing was 30 cm, the sowing depth was 15 cm, and the plant density was 58,000 plants•hm⁻². Other field management was the same as that in large area of field. The number of large- and medium-sized potatoes (2300 grams) per plant was randomly determined, and the relative increase rate of large- and medium-sized potatoes was determined. The yield per mu and the relative increase rate of yield were determined. The crude starch content and increase rate of crude starch content were determined. The control effect on root rot of potatoes was also determined.

**Table 5. Growth test results of potatoes with fungicidal fertilizer composition of the present invention**

| Example | Amount (active ingredient g/mu) | Fresh weight of large- and medium-sized potatoes (g/ plant) | Increase rate of large- and medium-sized potatoes, % | Yield (kg/ mu) | Increase rate of yield % | Crude starch content, % | Increase rate of crude starch content % | 10 days after application | | 30 days after application | |
|---|---|---|---|---|---|---|---|---|---|---|---|
| | | | | | | | | Disease index of root rot | Control effect (%) | Disease Index of root rot | Control effect (%) |
| Example 1 | 7000 | 526.5 | 16.5 | 1511 | 17.5 | 18.3 | 15.8 | 7.54 | 72.33 | 14.91 | 61.56 |
| Example 2 | 7000 | 535.0 | 18.4 | 1552 | 20.7 | 18.6 | 17.7 | 6.77 | 75.18 | 14.00 | 63.90 |
| Example 3 | 7000 | 543.6 | 20.3 | 1604 | 24.7 | 18.8 | 19.0 | 5.75 | 78.89 | 13.99 | 63.94 |
| Example 4 | 7000 | 559.0 | 23.7 | 1601 | 24.5 | 19.1 | 20.9 | 5.41 | 80.15 | 12.81 | 66.97 |
| Example 5 | 7000 | 565.8 | 25.2 | 1657 | 28.9 | 19.3 | 22.2 | 4.30 | 84.24 | 11.90 | 69.33 |
| Example 6 | 7000 | 581.1 | 28.6 | 1774 | 38.0 | 19.6 | 24.1 | 3.83 | 85.96 | 11.35 | 70.74 |
| Example 7 | 7000 | 589.7 | 30.5 | 1903 | 48.0 | 20.2 | 27.8 | 3.78 | 86.13 | 10.91 | 71.88 |
| Example 8 | 7000 | 597.9 | 32.3 | 1795 | 39.6 | 19.9 | 25.9 | 3.16 | 88.42 | 10.18 | 73.75 |
| Example 9 | 7000 | 565.3 | 25.1 | 1668 | 29.7 | 19.2 | 21.5 | 4.62 | 83.07 | 11.88 | 69.37 |
| Example 10 | 7000 | 546.3 | 20.9 | 1551 | 20.6 | 17.4 | 10.1 | 6.51 | 76.13 | 13.70 | 64.68 |
| Example 11 | 7000 | 520.1 | 15.1 | 1473 | 14.5 | 17.8 | 12.7 | 8.14 | 70.15 | 15.22 | 60.77 |
| γ-poly-glutamic acid | 400 | 499.3 | 10.5 | 1422 | 10.6 | 17.1 | 8.2 | 18.40 | 32.51 | 28.95 | 25.37 |
| γ-poly-glutamic acid | 100 | 492.6 | 9.0 | 1383 | 7.5 | 16.4 | 3.8 | 22.53 | 17.34 | 33.18 | 14.47 |
| γ-poly-glutamic acid | 50 | 481.3 | 6.5 | 1343 | 4.4 | 16.1 | 1.9 | 24.57 | 9.87 | 37.11 | 4.34 |
| Potassium phosphite | 7000 | 518.8 | 14.8 | 1446 | 12.4 | 16.8 | 6.3 | 11.56 | 57.59 | 26.19 | 32.47 |
| Water control (CK) | - | 451.9 | - | 1286 | - | 15.8 | - | 27.26 | - | 38.79 | - |

It can be seen from (Table 5) that the combined use of potassium phosphite and γ-poly-glutamic acid can significantly increase the potato yield and crude starch content, and has a good and lasting control effect on root rot of potatoes. Potatoes are potassium-loving crops and are highly dependent on potassium. For the combination of potassium phosphite and γ-poly-glutamic acid, γ-poly-glutamic acid can increase the absorption and utilization of potassium phosphite in the soil by potatoes, thus avoiding loss of fertilizer; has a synergistic effect and a good slow-control effect on the decomposed phosphorous acid in preventing and controlling soil-borne diseases of potatoes, and can improve the lasting period of the control effect of potassium phosphite.
(2) Yield increase and disease prevention test of soybean with the fungicidal fertilizer composition of the present invention The test fertilizer from each example of the present invention was applied in an amount of 4000 g of effective ingredient per mu, the control fertilizer γ-poly-glutamic acid was applied in an amount of 600 g, 300 g, 100 g, 50 g, or 15 g of effective ingredient per mu, and potassium phosphite was applied alone in an amount of 4000 g/mu. Fertilization method: The fertilizer was co-applied with other fertilizers. The yield, quality and control effect on disease on soybean were determined.

**Table 6. Yield increase and disease control test of soybean with fungicidal fertilizer composition of the present invention**

| Example | Branches (count) | Increase rate (%) | Weight per 100 grains (g) | Increase rate (%) | Yield (667 M2) | Increase rate ((%)) | 12 days after application | | 35 days after application | |
|---|---|---|---|---|---|---|---|---|---|---|
| | | | | | | | Disease Index of root rot | Control effect (%) | Disease index of root rot | Control effect ((%)) |
| Example 12 | 18.7 | 8.2 | 27.59 | 11.5 | 206.1 | 16.7 | 4.36 | 77.36 | 11.03 | 65.02 |
| Example 13 | 18.9 | 9.3 | 28.06 | 13.4 | 210.0 | 18.9 | 3.54 | 81.62 | 10.57 | 66.47 |
| Example 14 | 19.1 | 10.4 | 28.25 | 14.2 | 213.2 | 20.7 | 3.43 | 82.17 | 9.80 | 68.92 |
| Example 15 | 19.5 | 12.7 | 28.87 | 16.7 | 216.0 | 22.3 | 2.92 | 84.85 | 9.14 | 70.99 |
| Example 16 | 19.8 | 14.5 | 29.02 | 17.3 | 220.2 | 24.7 | 2.46 | 87.24 | 8.82 | 72.02 |
| Example 17 | 19.7 | 13.8 | 27.98 | 13.1 | 212.1 | 20.1 | 2.97 | 84.56 | 9.50 | 69.85 |
| Example 18 | 19.2 | 11.2 | 27.26 | 10.2 | 208.2 | 17.9 | 3.59 | 81.33 | 10.64 | 66.24 |
| Example 19 | 19.0 | 9.8 | 26.87 | 8.6 | 202.6 | 14.7 | 4.44 | 76.91 | 11.14 | 64.66 |
| γ-poly-glutamic acid 600 g/mu | 18.3 | 5.7 | 26.42 | 6.8 | 195.1 | 10.5 | 13.95 | 27.52 | 25.57 | 18.89 |
| γ-poly-glutamic acid300 g/mu | 18.1 | 4.6 | 26.05 | 5.3 | 189.5 | 7.3 | 14.88 | 22.71 | 26.55 | 15.76 |
| γ-poly-glutamic acid 100 g/mu | 18.0 | 4.1 | 25.75 | 4.1 | 186.7 | 5.7 | 15.37 | 20.13 | 28.16 | 10.67 |
| γ-poly-glutamic acid50 g/mu | 17.8 | 2.7 | 25.61 | 3.5 | 184.5 | 4.5 | 16.52 | 14.20 | 29.04 | 7.86 |
| γ-poly-glutamic acid 15 g/mu | 17.5 | 1.2 | 25.43 | 2.8 | 181.7 | 2.9 | 17.38 | 9.70 | 30.19 | 4.22 |
| Potassium phosphite | 18.5 | 6.8 | 26.50 | 7.1 | 196.7 | 11.4 | 4.73 | 75.42 | 19.93 | 36.78 |
| Water control (CK) | 17.3 | - | 24.74 | - | 176.6 | - | 19.25 | - | 31.52 | - |

It can be seen from (Table 6) that the combined use of potassium phosphite and γ-poly-glutamic acid can significantly promote the growth of soybeans, mainly shown by increased number of branches, increased grain weight, and increased yield per mu, and has a good control effect on root rot, a soil-borne disease of soybeans, where the effective duration is long compared with than potassium phosphite. Potassium phosphite and γ-poly-glutamic acid have a very good complementary effect, γ-poly-glutamic acid also has the function of retaining water and fertilizer. On the one hand, γ-poly-glutamic acid can improve the absorption and utilization of potassium phosphite in the soil by soybean. On the other hand, γ-poly-glutamic acid has a synergistic effect and a good slow-control effect on the decomposed phosphorous acid in preventing and controlling soil-borne diseases of soybean.
(3) Yield increase and disease control test of Chinese wolfberry with fungicidal fertilizer composition of the present invention (Table 7)
The test was carried out in a Chinese wolfberry planting test plot in Koluke Town, Delingha City, Qinghai Province. Chinese wolfberry plants were all three-year-old seedlings of variety "Ningqi No. 7" at a density of 270 plants/667m². This experiment was designed such that different plots were arranged in order. The test fertilizer from each example of the present invention was applied in an amount of 1.2 kg of active ingredient per mu, the control fertilizer γ-poly-glutamic acid was applied in an amount of 100 g, or 50 g of active ingredient per mu, potassium phosphite was applied alone in an amount of 1.2 kg/mu, and a microbial agent control fertilizer at a standard of 60 × 10⁸/g was applied in an amount of 1.5 kg. Fertilization method: It was applied together with other base fertilizers, by laying the fertilizer at the bottom of the planting pit, where the depth of the trench was 70 cm, the diameter of the pit was 80 cm, and the soil was mixed in and applied at the bottom when applying fertilizer. The yield, quality and control effect on disease on fresh Chinese wolfberry fruit were determined.

**Table 7. Yield increase and disease control test of Chinese wolfberry with fungicidal fertilizer composition of the present invention**

| Example | Yield of fresh Chinese wolfberry fruit | | Quality | | Disease (black fruit) | | | |
|---|---|---|---|---|---|---|---|---|
| | Weight per 100 fruits (g) | Yield (kg/ mu) | Polysaccharide (%) | Total amino acid content (%) | 10 days after application | | 30 days after application | |
| | | | | | Disease index | Control effect % | Disease index | Control effect % |
| Example 20 | 164.9 | 3515.9 | 10.38 | 8.28 | 3.14 | 79.52 | 8.35 | 70.80 |
| Example 21 | 167.6 | 3531.6 | 11.52 | 8.15 | 2.89 | 81.16 | 7.73 | 72.99 |
| Example 22 | 163.8 | 3511.3 | 11.46 | 8.23 | 2.75 | 82.08 | 8.97 | 68.65 |
| Example 23 | 165.5 | 3541.7 | 11.63 | 8.16 | 3.22 | 78.95 | 8.47 | 70.39 |
| Example 24 | 162.1 | 3488.9 | 10.82 | 8.13 | 2.98 | 80.58 | 8.99 | 68.57 |
| Example 25 | 166.5 | 3531.1 | 10.94 | 8.10 | 2.86 | 81.36 | 9.12 | 68.13 |
| Example 26 | 163.7 | 3505.2 | 11.06 | 8.18 | 2.92 | 80.94 | 8.63 | 69.83 |
| Example 27 | 175.9 | 3744.3 | 13.08 | 8.49 | 2.29 | 85.07 | 7.78 | 72.80 |
| Example 28 | 174.5 | 3724.3 | 12.79 | 8.36 | 2.31 | 84.95 | 8.09 | 71.71 |
| Example 29 | 177.8 | 3814.9 | 13.14 | 8.43 | 2.12 | 86.14 | 8.42 | 70.57 |
| Example 30 | 175.9 | 3784.3 | 12.38 | 8.41 | 2.16 | 85.93 | 7.60 | 73.42 |
| Example 31 | 178.2 | 3819.5 | 12.47 | 8.29 | 2.01 | 86.89 | 8.27 | 71.11 |
| Example 32 | 173.5 | 3714.9 | 13.01 | 8.34 | 2.35 | 84.65 | 8.15 | 71.50 |
| Example 33 | 175.1 | 3743.1 | 12.59 | 8.38 | 2.02 | 86.81 | 8.00 | 72.05 |
| Example 34 | 160.4 | 3385.8 | 11.13 | 8.18 | 2.58 | 83.19 | 9.03 | 68.45 |
| Example 35 | 156.2 | 3440.7 | 10.98 | 8.06 | 2.70 | 82.36 | 9.20 | 67.85 |
| Example 36 | 159.1 | 3464.9 | 10.57 | 8.35 | 2.36 | 84.61 | 8.73 | 69.47 |
| Example 37 | 158.9 | 3426.3 | 11.24 | 8.13 | 2.52 | 83.55 | 8.67 | 69.71 |
| Example 38 | 161.3 | 3456.2 | 10.69 | 8.21 | 2.76 | 81.96 | 8.42 | 70.56 |
| Example 39 | 158.2 | 3381.5 | 11.05 | 8.07 | 2.69 | 82.47 | 8.89 | 68.93 |
| Example 40 | 162.5 | 3402.3 | 10.14 | 8.15 | 2.91 | 81.02 | 9.47 | 66.88 |
| γ-poly-glutamic acid 100 g/mu | 124.7 | 2658.6 | 9.54 | 7.68 | 10.85 | 29.17 | 22.50 | 21.35 |
| γ-poly-glutamic acid50 g/mu | 117.5 | 2524.5 | 8.79 | 7.53 | 12.63 | 17.56 | 25.46 | 10.99 |
| Potassium phosphite | 126.8 | 2703.5 | 8.63 | 7.41 | 5.13 | 66.51 | 15.67 | 45.24 |
| 60 × 10⁸/g *Bacillus subtilis* granular formulation | 123.9 | 2641.5 | 8.76 | 7.59 | 8.83 | 42.35 | 19.79 | 30.84 |
| 60 × 10⁸/g *Trichoderma harzianum* granular formulation | 124.7 | 2655.6 | 8.85 | 7.48 | 8.33 | 45.62 | 19.40 | 32.20 |
| 60 × 10⁸/g *Bacillus licheniformis* granular formulation | 122.8 | 2622.9 | 9.09 | 7.45 | 8.54 | 44.28 | 19.39 | 32.23 |
| 60 × 10⁸/g *Bacillus thuringiensis* granular formulation | 120.5 | 2571.7 | 9.11 | 7.54 | 8.70 | 43.19 | 19.61 | 31.45 |
| 60 × 10⁸/g *Bacillus cereus* granular formulation | 124.6 | 2662.4 | 8.89 | 7.51 | 8.25 | 46.17 | 19.00 | 33.59 |
| 60 × 10⁸/g *Bacillus sedimentatum* granular formulation | 119.7 | 2565.6 | 9.05 | 7.49 | 8.81 | 42.52 | 19.46 | 31.96 |
| 60 × 10⁸/g *Bacillus lateraporus* granular formulation | 121.3 | 2593.8 | 8.98 | 7.61 | 8.29 | 45.86 | 19.06 | 33.37 |
| Water control | 94.5 | 2132.3 | 8.21 | 7.25 | 15.32 | | 28.61 | |

It can be seen from (Table 7) that the combined use of potassium phosphite, γ-poly-glutamic acid and microbial agent can significantly promote the growth of Chinese wolfberry, mainly shown by increased fruit weight, increased yield per mu, and improved quality of Chinese wolfberry fruit, and has a good control on root rot of Chinese wolfberry, where the effective duration is long compared with potassium phosphite and the microbial agent used alone. γ-poly-glutamic acid can be directly converted into amino acids in the soil to provide nutrients for Chinese wolfberry, and have a very good complementary effect with potassium phosphite and the microbial agent. γ-poly-glutamic acid also has the function of retaining water and fertilizer. On the one hand, γ-poly-glutamic acid can improve the absorption and utilization of potassium phosphite in the soil by Chinese wolfberry. On the other hand, γ-poly-glutamic acid can provide a suitable soil environment for microorganisms. Also, γ-poly-glutamic acid has a synergistic effect and a good slow-control effect on the decomposed phosphorous acid in preventing and controlling soil-borne diseases of Chinese wolfberry.
(4) Yield increase and disease control test of Chinese wolfberry with fungicidal fertilizer composition of the present invention (Table 9)
The test fertilizer from each example of the present invention was applied in an amount of 800 g of active ingredient per mu, the control fertilizer γ-poly-glutamic acid was applied in an amount of 60 g, or 30 g of active ingredient per mu, potassium phosphite was applied alone in an amount of 800 kg/mu, the control macronutrient fertilizer was applied in an amount of 800 g, and the micronutrient fertilizer was applied in an amount of 800 g. The test fertilizer from each example of the present invention was applied in an amount of 4000 g of effective ingredient per mu, the control fertilizer γ-poly-glutamic acid was applied in an amount of 600 g, 300 g, 100 g, 50 g, or 15 g of effective ingredient per mu, and potassium phosphite was applied alone in an amount of 4000 g/mu. Fertilization method: The fertilizer was applied three times by spraying during the flowering and fruiting period. The yield, quality and control effect on disease on peanut were determined.

**Table 8. Yield increase and disease control test of peanut with fungicidal fertilizer composition of the present invention**

| Example | Yield | | | Quality | | Disease (Stem rot) | | | |
|---|---|---|---|---|---|---|---|---|---|
| | Weight per 100 fruits (g) | Seed yield (%) | Yield (kg/mu) | Linoleic acid (%) | Protein (%) | 10 days after application | | 30 days after application | |
| | | | | | | Disease index | Control effect, % | Disease index | Control effect, % |
| Example 41 | 141.1 | 73.7 | 410.5 | 46.54 | 26.03 | 2.84 | 81.54 | 5.50 | 64.18 |
| Example 42 | 143.8 | 74.3 | 421.8 | 47.35 | 26.19 | 2.41 | 84.31 | 5.27 | 65.68 |
| Example 43 | 157.9 | 74.9 | 408.6 | 47.58 | 27.85 | 2.57 | 83.27 | 4.77 | 68.92 |
| Example 44 | 148.5 | 75.8 | 392.1 | 46.19 | 26.94 | 2.56 | 83.36 | 4.53 | 70.51 |
| γ-poly-glutamic acid 60 g/mu | 126.7 | 69.1 | 310.8 | 45.36 | 24.31 | 10.55 | 31.29 | 13.58 | 11.58 |
| γ-poly-glutamic acid 30 g/mu | 113.4 | 66.7 | 285.3 | 44.52 | 22.91 | 12.23 | 20.41 | 14.41 | 6.21 |
| Potassium phosphite | 122.3 | 70.3 | 335.7 | 44.61 | 23.08 | 3.28 | 78.64 | 9.31 | 39.36 |
| N+P+K≥500g/1, Cu+Zn+Fe+Mn+B≥ 100g/l | 127.5 | 70.8 | 341.6 | 46.08 | 24.02 | 12.55 | 18.31 | 14.66 | 4.53 |
| Water control | 92.8 | 65.3 | 235.5 | 43.92 | 20.41 | 15.36 | - | 25.41 | - |

It can be seen from (Table 8) that the combined use of potassium phosphite, γ-poly-glutamic acid and macronutrient fertilizer can significantly promote the growth of peanut, mainly shown by increased weight per 100 fruits, increased seed yield, increased yield per mu and improved quality of peanut, and has a good control on stem rot of peanut, where the effective duration is long compared with potassium phosphite, γ-poly-glutamic acid can be directly converted into amino acids in the soil to provide nutrients for peanut, and have a very good complementary effect with potassium phosphite, γ-poly-glutamic acid also has the function of retaining water and fertilizer. On the one hand, γ-poly-glutamic acid can improve the absorption and utilization of potassium phosphite in the soil by peanut. On the other hand, γ-poly-glutamic acid has a synergistic effect and a good slow-control effect on the decomposed phosphorous acid in preventing and controlling soil-borne diseases of peanut.
(5) Yield increase and disease control test of pepper with fungicidal fertilizer composition of the present invention (Table 9)
The test fertilizer from each example of the present invention was applied in an amount of 400 g of active ingredient per mu, the control fertilizer γ-poly-glutamic acid was applied in an amount of 40 g of active ingredient per mu, potassium phosphite was applied alone in an amount of 400g/mu, the control macronutrient fertilizer was applied by dissolving in water in an amount of 400 g per mu. This fertilizer was applied on the basis of conventional fertilization in each treatment area. Fertilization method: The fertilizer was applied by spraying during the seedling stage of pepper. The yield, quality and control effect on disease on pepper were determined.

**Table 9. Yield increase and disease control test of pepper with fungicidal fertilizer composition of the present invention**

| Example | Yield | | Quality | | Disease (blight) | | | |
|---|---|---|---|---|---|---|---|---|
| | Weight of single fruit (g) | Total yield (kg/mu) | Vitamin C (mg/100 g) | Soluble sugar (%) | 10 days after application | | 42 days after application | |
| | | | | | Disease index | Control effect, % | Disease index | Control effect, % |
| Example 45 | 62.3 | 4605 | 27.6 | 2.53 | 1.76 | 83.19 | 6.15 | 66.13 |
| Example 46 | 64.1 | 4862.0 | 28.4 | 2.51 | 1.64 | 84.38 | 6.32 | 65.19 |
| N+P+K≥500g/1 | 53.6 | 3621 | 25.3 | 2.37 | 8.97 | 14.35 | 17.40 | 4.14 |
| γ-poly-glutamic acid | 49.2 | 3382 | 26.8 | 2.45 | 7.72 | 26.27 | 16.29 | 10.26 |
| Potassium phosphite | 51.8 | 3462 | 24.4 | 2.33 | 3.00 | 71.36 | 12.43 | 31.52 |
| Water control | 45.5 | 2538.0 | 22.5 | 2.15 | 10.47 | -- | 18.15 | -- |

It can be seen from (Table 9) that the combined use of potassium phosphite, γ-poly-glutamic acid and macronutrient fertilizer can significantly promote the growth of Chinese wolfberry, mainly shown by increased fruit weight, increased yield per mu, and improved quality of pepper, and has a good control on root rot of pepper, where the effective duration is long compared with potassium phosphite and used alone.
(6) Yield increase and disease control test of tomato with fungicidal fertilizer composition of the present invention (Table 10)
The test fertilizer from each example of the present invention was applied in an amount of 600 g of active ingredient per mu, the control fertilizer γ-poly-glutamic acid was applied in an amount of 60 g of active ingredient per mu, potassium phosphite was applied alone in an amount of 600 g/mu, the control macronutrient fertilizer was applied by dissolving in water in an amount of 600 g per mu. This fertilizer was applied on the basis of conventional fertilization in each treatment area. Fertilization method: The fertilizer was applied by spraying during the seedling stage of tomato. The yield, quality and control effect on disease on tomato were determined.

**Table 10. Yield increase and disease control test of tomato with fungicidal fertilizer composition of the present invention**

| Example | Yield | | Quality | | Disease (rot) | | | |
|---|---|---|---|---|---|---|---|---|
| | Weight of single fruit (g) | Total yield (kg/mu) | Vitamin C (mg/100 g) | Amino acid (mg/100 kg) | 12 days after application | | 45 days after application | |
| | | | | | Disease index | Control effect, % | Disease index | Control effect, % |
| Example 47 | 27.1 | 4215 | 18.93 | 625.45 | 3.46 | 78.12 | 8.81 | 64.31 |
| Example 48 | 26.4 | 4421 | 18.67 | 637.19 | 3.28 | 79.28 | 8.21 | 66.72 |
| Cu+Zn+Fe+Mn+B≥100g/l | 23.7 | 3874 | 16.18 | 599.68 | 13.90 | 12.12 | 23.77 | 3.69 |
| γ-poly-glutamic acid | 21.7 | 3519 | 17.32 | 610.17 | 12.44 | 21.35 | 22.89 | 7.26 |
| Potassium phosphite | 22.6 | 3626 | 15.69 | 695.31 | 5.95 | 62.42 | 16.16 | 34.52 |
| Water control | 18.9 | 3215 | 14.28 | 578.62 | 15.82 | -- | 24.68 | -- |

It can be seen from (Table 10) that the combined use of potassium phosphite, γ-poly-glutamic acid and microbial agent can significantly promote the growth of Chinese wolfberry, mainly shown by increased fruit weight, increased yield per mu, and improved quality of In addition wolfberry fruit, and has a good control on root rot of Chinese wolfberry, where the effective duration is long compared with potassium phosphite and used alone.

## Claims

1. A fungicidal fertilizer composition, having active ingredients comprising γ-poly-glutamic acid and potassium phosphite.

2. The composition according to claim 1, wherein the weight ratio of γ-poly-glutamic acid to potassium phosphite is 1:8-400.

3. The composition according to claim 1, wherein the weight ratio of γ-poly-glutamic acid to potassium phosphite is preferably 1:10-350; and the weight ratio of γ-poly-glutamic acid to potassium phosphite is further preferably 1:10-300.

4. The composition according to claim 1, 2, or 3, further comprising a microbial agent.

5. The composition according to claim 4, wherein the microbial agent is selected from Bacillus microbial agents, and mixed microbial agents of one or more of *Trichoderma harzianum* or *Purpureocillium lilacinum.*

6. The composition according to claim 5, wherein the Bacillus microbial agent is preferably a mixed microbial agent of one or more of *Bacillus subtilis, Bacillus licheniformis, Bacillus thuringiensis, Bacillus cereus, Bacillus sedimentatum,* or *Bacillus lateraporus.*

7. The composition according to claim 4, 5 or 6, wherein the effective viable count of the microbial agent in the composition is not less than 2 × 10⁹/g.

8. The composition according to claim 4, 5, 6 or 7, further comprising organic matter.

9. The fungicidal fertilizer composition according to any one of claims 1 to 8, further comprising macronutrient or micronutrient fertilizers or a mixture of macronutrient or micronutrient fertilizers.

10. Use of the fungicidal fertilizer composition according to any one of claims 1 to 9 in controlling crop diseases, promoting crop growth and increasing crop yield.

## Patentansprüche

1. Fungizide Düngemittelzusammensetzung mit aktiven Bestandteilen, umfassend γ-Polyglutaminsäure und Kaliumphosphit.

2. Zusammensetzung nach Anspruch 1, wobei das Gewichtsverhältnis von γ-Polyglutaminsäure zu Kaliumphosphit 1:8-400 beträgt.

3. Zusammensetzung nach Anspruch 1, wobei das Gewichtsverhältnis von γ-Polyglutaminsäure zu Kaliumphosphit vorzugsweise 1:10-350 beträgt; und das Gewichtsverhältnis von γ-Polyglutaminsäure zu Kaliumphosphit weiter vorzugsweise 1:10-300 beträgt.

4. Zusammensetzung nach Anspruch 1, 2 oder 3, weiterhin umfassend einen mikrobiellen Wirkstoff.

5. Zusammensetzung nach Anspruch 4, wobei der mikrobielle Wirkstoff ausgewählt ist aus mikrobiellen Bacillus-Wirkstoffen und gemischten mikrobiellen Wirkstoffen aus einem oder mehreren von *Trichoderma harzianum* oder *Purpureocillium lilacinum.*

6. Zusammensetzung nach Anspruch 5, wobei der mikrobielle Bacillus-Wirkstoff vorzugsweise ein gemischter mikrobieller Wirkstoff aus einem oder mehreren von *Bacillus subtilis, Bacillus licheniformis, Bacillus thuringiensis, Bacillus cereus, Bacillus sedimentatum* oder *Bacillus lateraporus* ist.

7. Zusammensetzung nach Anspruch 4, 5 oder 6, wobei die effektive Keimzahl des mikrobiellen Wirkstoffs in der Zusammensetzung nicht weniger als 2× 10⁹/g beträgt.

8. Zusammensetzung nach Anspruch 4, 5, 6 oder 7, weiterhin umfassend organisches Material.

9. Fungizide Düngemittelzusammensetzung nach einem der Ansprüche 1 bis 8, weiterhin umfassend Makronährstoff- oder Mikronährstoffdüngemittel oder eine Mischung aus Makronährstoff- oder Mikronährstoffdüngemitteln.

10. Verwendung der fungiziden Düngemittelzusammensetzung nach einem der Ansprüche 1 bis 9 zur Bekämpfung von Kulturpflanzenkrankheiten, Förderung des Kulturpflanzenwachstums und Steigerung des Kulturpflanzenertrags.

## Revendications

1. Composition d'engrais fongicide, comportant des substances actives comprenant de l'acide γ-poly-glutamique et du phosphite de potassium.

2. Composition selon la revendication 1, dans laquelle le rapport en poids de l'acide γ-poly-glutamique au phosphite de potassium est de 1:8-400.

3. Composition selon la revendication 1, dans laquelle le rapport en poids de l'acide γ-poly-glutamique au phosphite de potassium est de préférence de 1:10-350 ; et le rapport en poids de l'acide γ-poly-glutamique au phosphite de potassium est plus préférablement de 1:10-300.

4. Composition selon la revendication 1, 2, ou 3, comprenant en outre un agent microbien.

5. Composition selon la revendication 4, dans laquelle l'agent microbien est choisi parmi des agent microbiens Bacillus, et des agent microbiens mixtes de l'un ou plusieurs parmi *Tricotera harzianum* ou *Purpureocillium lilacinum.*

6. Composition selon la revendication 5, dans laquelle l'agent microbien Bacillus est de préférence un agent microbien mixte de l'un ou plusieurs parmi *Bacillus subtilis, Bacillus licheniformis, Bacillus thuringiensis, Bacillus cereus, Bacillus sedimentatum* ou *Bacillus lateraporus.*

7. Composition selon la revendication 4, 5 ou 6, dans laquelle la numération viable efficace de l'agent microbien dans la composition n'est pas inférieure à 2 × 10⁹/g.

8. Composition selon la revendication 4, 5, 6 ou 7, comprenant en outre une matière organique.

9. Composition d'engrais fongicide selon l'une quelconque des revendications 1 à 8, comprenant en outre des engrais à macronutriments ou micronutriments ou un mélange d'engrais à macronutriments ou micronutriments.

10. Utilisation de la composition d'engrais fongicide selon l'une quelconque des revendications 1 à 9 dans la lutte contre les maladies des cultures, la promotion de la croissance des cultures et l'augmentation du rendement des cultures.
